(19) Europäisches Patentamt
European Patent Office
Office européen des brevets

(11) **EP 2 987 625 A1**

(12) **EUROPÄISCHE PATENTANMELDUNG**

(43) Veröffentlichungstag:
24.02.2016 Patentblatt 2016/08

(51) Int Cl.:
*B29C 65/56* *(2006.01)*   *F16B 5/02* *(2006.01)*

(21) Anmeldenummer: 14181510.0

(22) Anmeldetag: 20.08.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: LANXESS Deutschland GmbH
50569 Köln (DE)

(72) Erfinder: Dajek, Ulrich
51375 Leverkusen (DE)

(54) **Verschraubte Mischbaugruppen**

(57)    Verwendung von Organoblech zur Reduktion von Relaxationsvorgängen oder zum Erhalt der Schraubenvorspannung von Mischbaugruppen aus einerseits wenigstens einem Thermoplast basierten Organoblech und andererseits wenigstens einer Metallkomponente, die durch wenigstens eine Schraube mit Gewinde und wenigstens einem entsprechenden, das Schraubgewinde aufnehmenden, metallischen Anschlusselement verbunden sind, ohne dass zusätzliche Elemente entlang des Schraubenschafts erforderlich sind, bei Temperaturen im Bereich von -40°C bis 60°C.

EP 2 987 625 A1

## Beschreibung

Die vorliegende Erfindung betrifft die Verwendung von Organoblechen zur Unterbindung des Verlustes von Schraubenvorspannungen in verschraubten Mischbaugruppen.

Unter einem Organoblech wird im Rahmen der vorliegenden Erfindung ein Faserverbundwerkstoff auf Basis Thermoplast getränkter Fasern, insbesondere auf Basis eines mit Thermoplast einlaminierten und Fasern basierten Gewebes verstanden, wobei der Begriff des Gewebes im Rahmen der vorliegenden Anmeldung stellvertretend für verschiedenste Faseranordnungen verwendet wird.

Organobleche als Faser-Kunststoff-Verbunde weisen in der Regel hohe spezifische Steifigkeiten und Festigkeiten auf. Dies macht sie zu geeigneten Werkstoffen in Leichtbauanwendungen. Aus Faser-Kunststoff-Verbunden werden überwiegend flächige Strukturen hergestellt.

Hohe Festigkeit und Steifigkeit bei gleichzeitig geringer Dichte und allgemein eine außerordentlich hohe Belastbarkeit in Faserrichtung haben Organobleche deshalb in den Leichtbau, insbesondere für Komponenten von Kraftfahrzeug-Karosserien, Einzug halten lassen und verschiedentlich bereits reine Leichtmetallkonstruktionen verdrängt.

Es zeigt sich aber, dass aus wirtschaftlichen und technologischen Gründen dem Einsatz von Organoblechen Grenzen gesetzt sind, etwa hinsichtlich der Produktionskosten oder der Standfestigkeit. Deshalb wird einem intelligenten "Leichtbau mit Mischbaugruppen" aus den Komponenten Organoblech und (Leicht-)Metall, insbesondere Aluminium oder Magnesium, die Zukunft gehören. Dies erfordert für jede der wenigstens zwei Komponenten einer solchen Mischbaugruppe die geeignete Materialauswahl im Hinblick auf Funktion, Herstellung, Haltbarkeit und Kosten.

Damit entsteht das Problem einer funktionsgerechten, auch großtechnisch beherrschbaren und kostengünstig erstellbaren mechanischen Verbindungstechnik zwischen artfremden Werkstoffen der Komponenten solcher Mischbaugruppen, wenigstens einem Organoblech einerseits und wenigstens einem (Leicht-)Metall andererseits.

## Stand der Technik

Stoffschlüssige Klebeverbindungen bedürfen kritischer Kleber-Materialauswahl und sorgfältiger chemischer und mechanischer Vorbereitung der miteinander zu verklebenden, aufeinander liegenden Fügeflächen der beiden Mischbaugruppen-Komponenten. Zudem haftet den stoffschlüssigen Klebeverbindungen der generelle Nachteil an, dass bei hoher Scherfestigkeit der Klebeverbindung deren Dauerschälfestigkeit gegen Biegebeanspruchungen oft kritisch ist. Außerdem erfolgt die Kraftüberleitung zwischen den Komponenten nicht über deren Querschnitte, sondern nur längs deren Fügeflächen über das dort eingefügte Klebematerial, was im Falle des Einsatzes von Organoblech(en) zu einem deutlichen Versatz im Kraftfluss zwischen dem lasttragenden Fasergewebe im Mittenbereich des Organoblechs einerseits und andererseits der quer dagegen versetzten metallischen Komponente, und hier deshalb zu einem Biegemoment, führt.

Um eine kritische Schwächung des Organoblechs zu vermeiden, wird nach der DE 10 2009 013 265 A1 ein thermomechanisches Ausformfügen in Weiterentwicklung des Fließformbohrens (zum Verbinden von Metallteilen mit thermoplastischen Kunststoffen gemäß DE 26 56 017 A1) eingesetzt. Das Fließformbohren beruht darauf, mittels eines spitzkegelförmigen Bohrdornes durch Druck- und Reibkrafteinleitung in die metallische Komponente diese lokal an zu schmelzen und durch diese die Fügeflächen hindurch vorübergehend auch noch bis in die dann hier ebenfalls geschmolzene thermoplastische Komponente einzudringen, womit, nach dem Zurückziehen des Bohrdornes, die beiden Schmelzen sich vor ihrer Abkühlungs-bedingten Erstarrung miteinander vermengen. Allerdings handelt es sich hierbei wiederum nur um eine Punktverbindung für den Lastübergang. Nachteilig ist demnach im Hinblick auf das Verbinden eines Organoblechs mit einer Metallkomponente, dass beim Fließformbohren die metallische Komponente zumindest lokal Schmelztemperatur erreichen muss. Dieser lokale Bereich wird zwangsweise den auszuformenden Bereich zum Organoblech umfassen. Das dabei erreichte Temperaturniveau führt - auch wenn nur sehr kurzfristig - zum Verdampfen der kontaktierenden Kunststoff Grenzschicht des Organoblechs. Somit hätte man zwar eine metallische Hülse formschlüssig eingebracht, aber den umgebenden Kunststoff unkontrollierbar "verkohlt", was einen wesentlichen mechanischen Schwachpunkt des Fließformbohrens in der Anwendung bei Organoblechen darstellt.

Im Falle des thermomechanischen Ausformfügens mit Organoblech als der thermoplastischen Komponente einer Mischbaugruppe vermeidet die Spitze des Fließform-Bohrdornes ein Durchtrennen des Fasergewebes. Es werden die in der nun schmelzflüssigen Umgebung beweglichen Fasern vom Bohrdorn um den Eindringling herum zur Seite verdrängt, die lastübertragende Wirkung des ununterbrochenen Verlaufs der Fasern bleibt deshalb erhalten. Jedoch wird das unmittelbare Vermengen der beiden Schmelzen miteinander im Bohrloch des Fließformbohrens nun vermieden, indem Metallschmelze längs des Bohrdornes während dessen Vortriebs mit diesem zusammen in die thermoplastische Komponente hinein gezogen wird, um dann nach dem Zurückziehen des Bohrdornes, eingefasst vom umgebenden thermoplastischen Material, zu einer Metallhülse zu erstarren. Diese ist dann einerseits an die metallische Komponente angeformt und andererseits durchragt sie die thermoplastische Komponente. Der überstehende Rand wird abschließend mittels eines Umformwerkzeugs an der Austrittstelle des Organoblechs flach umgebördelt.

Die Lastübertragung zwischen den beiden Mischbaugruppen Komponenten soll so, anstatt über einen separat zugeführten Bolzen, über die vor Ort formgegossene Metallhülse erfolgen, zu der sich das aufgeschmolzene Metall um den Bohrdorn herum bis durch das Organoblech hindurch verfestigen muss. Das erscheint allerdings nur für speziell dazu ausgelegte Bemessungen realisierbar. Denn bei zu dünner metallischer Komponente steht nicht genug aufgeschmolzenes Material für das Ausbilden der Hülse zur Verfügung; und bei zu dicker metallischer Komponente muss zu deren Durchschmelzen derart viel Reibungsenergie eingebracht werden, dass das darunter gelegene thermoplastische Material schon zu früh aufschmilzt, um später noch als Außenform für die zu einer Hülse erstarrende Metallschmelze zu dienen. Für ein zuverlässiges Ausbilden solcher lastübertragender Hülsen in großtechnischem Maßstab zur Verbindung von Organoblechen mit metallischen Komponenten erscheinen die Randbedingungen zu eng.

DE 10 2013 001 943 A1 beschreibt eine Mischbaugruppe aus einem Organoblech und einer damit formschlüssig verbundenen metallischen Komponente von der wenigstens ein Vorsprung in das Organoblech eingreift, indem die metallische Komponente in ihrer Fügefläche mit angebrachten oder angeformten, zwischen Verstärkungsfasern im Organoblech eingreifenden, Wärmeeinleitungs- und Lastübertragungs-Vorsprüngen ausgestattet ist.

Nachteilig an der Lösung gemäß DE 10 2013 001 943 A1 ist, dass diese Verbindung unlösbar ist, es sei denn man "verschweisst" ein derartiges Metallelement als separates Befestigungselement. Somit hätte man wenigstens ein zusätzliches Bauteil, das über einen separaten Fügevorgang an das Organoblech angebracht werden müsste, um eine Mischbaugruppe zusammen zu fügen. Der dafür erforderliche Einsatz von Verbindungselementen wie Schrauben und Muttern führt eher zu einer unerwünschten Gewichtserhöhung und wirkt der gerade durch den Einsatz von Organoblechen angestrebten Gewichtseinsparung entgegen.

Da es sich bei der Lösung gemäß DE 10 2013 001 943 A1 um eine Art "Schweißverbindung" handelt und dabei die metallischen Elemente Lastübertragungs-Vorsprünge aufweisen, ist eine zutreffende rechnerische Vorhersagbarkeit/Auslegung der Verbundfestigkeit kaum möglich. Je nach Eindringtiefe und Konsolidierungsgrad beim Einbetten des in DE 10 2013 001 943 A1 beschriebenen metallischen Lastübertragungselements bis in das Fasergewebe des Organoblechs hinein stellt sich die Verbundfestigkeit der Mischbaugruppe sehr unterschiedlich dar, abhängig von der Konstanz der Fügeprozeß-Parameter und Toleranz der speziellen metallischen Fügeelemente.

Die DE 10 2008 034 772 A1 beschreibt eine Krafteinleitungsvorrichtung mit einer Verbundmaterialeinheit und einer in der Verbundmaterialeinheit mindestens teilweise eingebrachten Krafteinleitungseinheit, die mindestens ein Krafteinleitungselement und eine mit dem Krafteinleitungselement verbundene Verbindungseinheit umfasst, wobei die Verbindungseinheit mindestens zwei Platten aufweist, welche mindestens teilweise in einem schichtweisen Aufbau in die Verbundmaterialeinheit einbringbar sind.

Die DE 10 2011 119 251 A1 betrifft eine Vorrichtung zur Krafteinleitung in ein Bauteil aus Faserverbundwerkstoff mittels einer Schraubverbindung mit einem in einem Durchgang des Bauteils angeordneten bolzenartigen Anschlusselement. Dieser Lösung liegt insbesondere die Aufgabe zugrunde, die Haltbarkeit der Schraubverbindung am Bauteil aus Faserverbundwerkstoff zu verbessern. Die Aufgabe wird in DE 10 2011 119 251 A1 dadurch gelöst, dass die Schraubverbindung eine den Durchgang des Bauteils einfassende und das Anschlusselement aufnehmende zweiteilige Buchse aufweist, wobei das erste und zweite Buchsenteil der Buchse in axialer Erstreckung ineinander greifend ausgebildet sind und jedes Buchsenteil einen radial erstreckten Bundkragen mit einer dem Bauteil zugewandten Kragenseite aufweist, auf der eine Gleitfläche ausgebildet ist.

Zusammenfassend und nachteilig an den dargestellten Lösungen des Standes der Technik ist die Tatsache, dass entweder damit keine plattenförmigen Komponenten miteinander verbunden werden können, oder dass zusätzliche Elemente in Form von Dübeln, Buchsen, Niet- oder Schraubenschäften erforderlich sind, um die Vorspannung einer Schraube, insbesondere mit metrischem Gewinde, zu erhalten.

In einer Verschraubung bewirkt nämlich das Anziehen der Schraube oder der Mutter mit dem Anzugsmoment $M_A$ im Schaft der Schraube eine axiale Kraft F, auch Vorspannkraft $F_V$ genannt.

Während Klebungen im Falle von Organoblechen nur die erste Faserschicht mit dem Fügepartner verbinden und der weitere Kraftfluss durch die Polymermatrix darzustellen ist, was bei großen Belastungen zu Delamination führen kann, kommen bei Verbindungen nach dem Kraftschlussprinzip, insbesondere Verschraubungen, üblicherweise polymer-typische Kriecheffekte zum Tragen. So führt die Flächenpressung im Falle Polymer basierter Komponenten unter einem Schraubenkopf zu so genannten Relaxationsvorgängen in der Polymermatrix - dem so genannten "entspannenden Kriechen"-, was eine Reduzierung der Schraubenvorspannung und somit eine Verschlechterung der Verbindungsqualität Polymer basierter Komponenten zur Folge hat.

Die Aufgabe der vorliegenden Erfindung bestand deshalb in der Bereitstellung von Mischbaugruppen, die durch Verschraubungen, insbesondere mit metrischem Gewinde, zusammen gehalten werden, bei denen das Losdrehmoment mindestens 50% des Montagemoments beträgt.

Überraschenderweise wurde gefunden, dass Organoblech in bestimmten Temperaturbereichen selber eine Reduzierung der Schraubenvorspannung unterbindet und somit eine hohe Verbindungsqualität von Organoblech mit wenigstens einer Metallkomponente auf Basis eines Kraftschlusses mittels Schrauben sicher stellt.

**Erfindung**

Gegenstand der vorliegenden Erfindung ist die Verwendung von Organoblech zur Reduktion von Relaxationsvorgängen oder zum Erhalt der Schraubenvorspannung von Mischbaugruppen aus einerseits wenigstens einem Thermoplast basierten Organoblech und andererseits wenigstens einer Metallkomponente, die durch wenigstens eine Schraube mit Gewinde und wenigstens einem entsprechenden, das Schraubgewinde aufnehmenden, metallischen Anschlußelement verbunden sind, ohne dass zusätzliche Elemente entlang des Schraubenschafts erforderlich sind, bei Temperaturen im Bereich von -40°C bis 60°C.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen erfasst sind.

Der Erhalt der Schraubenvorspannung durch ein erfindungsgemäß einzusetzendes Organoblech führt in Mischbaugruppen zu einer hohen Beibehaltung der Verbindungsqualität derselben.

In einer bevorzugten Ausführungsform wird entweder unter dem Schraubenkopf oder unter dem wenigstens einen, das Gewinde aufnehmenden, metallischen Anschlusselement oder unter beiden jeweils wenigstens eine Unterlegscheibe eingefügt.

In bevorzugter Ausführungsform sind sowohl das Organoblech als auch die Metallkomponente in der engeren Umgebung der wenigstens einen Verschraubung flache, plattenförmige Komponenten. Die engere Umgebung im Sinne der vorliegenden Erfindung ist bevorzugt durch einen Radius im Bereich von 0,2 bis 5 cm um eine Bohrung zur Aufnahme einer Schraube bzw. eines Schraubenschaftes herum charakterisiert.

Erfindungsgemäß bevorzugt erfolgt die Verwendung von Organoblech zur Reduktion von Relaxationsvorgängen bzw. zum Erhalt der Schraubenvorspannung und der Verbindungsqualität von Mischbaugruppen bei Temperaturen im Bereich von -30°C bis 60°C.

Erfindungsgemäß bevorzugt wird als Gewinde aufnehmendes metallisches Anschlusselement wenigstens eine Kontermutter eingesetzt. In einer Ausführungsform aber sind metallische Anschlusselemente selber Metallbleche, die entweder mit wenigstens einer Kontermutter zur Mischbaugruppe mit wenigstens einem Organoblech verbunden werden oder Metallbleche, die selber mit wenigstens einem Gewindegang versehen sind, um wenigstens ein Schraubengewinde aufzunehmen.

Erfindungsgemäß bevorzugt werden Schrauben mit metrischem Gewinde eingesetzt.

**Organoblech**

Wie bereits oben kurz dargestellt, wird unter einem Organoblech ein Faserverbundwerkstoff (FVK) auf Basis Thermoplast getränkter Fasern, insbesondere auf Basis eines mit Thermoplast einlaminierten und Fasern basierten Gewebes, verstanden, wobei der Begriff des Gewebes im Rahmen der vorliegenden Anmeldung stellvertretend für verschiedenste Faseranordnungen - wie weiter unten definiert - verwendet wird.

Aus Faser-Kunststoff-Verbunden werden überwiegend flächige Strukturen hergestellt. Alternativ kann ein Organoblech auch als Faser-Kunststoff-Verbund (FKV) oder faserverstärkter Kunststoff bezeichnet werden. Organobleche enthalten wenigstens Verstärkungsfasern und eine Kunststoffmatrix. Die erfindungsgemäß im Organoblech einzusetzende Matrix aus wenigstens einem Thermoplast umgibt die Fasern, die durch Adhäsiv- oder Kohäsivkräfte an die Matrix gebunden sind. Durch die Verwendung von Faserwerkstoffen haben Faser-Kunststoff-Verbunde ein richtungsabhängiges Elastizitäts-verhalten.

Ohne Matrixkunststoff, also im vorliegenden Fall Thermoplast, sind die hohen spezifischen Festigkeiten und Steifigkeiten der Verstärkungsfaser nicht nutzbar. Erst durch die geeignete Kombination von Faser- und Matrixkunststoff entsteht ein neuer Konstruktionswerkstoff.

Faser-Kunststoff-Verbunde weisen in der Regel hohe spezifische Steifigkeiten und Festigkeiten auf. Dies macht sie zu geeigneten Werkstoffen in Leichtbauanwendungen. Aus Faser-Kunststoff-Verbunden bzw. Organoblechen werden überwiegend flächige Strukturen hergestellt.

Die mechanischen und thermischen Eigenschaften von Faser-Kunststoff-Verbunden bzw. Organoblechen können über eine Vielzahl von Parametern eingestellt werden. Neben der Faser-Matrix-Kombination können beispielsweise der Faserwinkel, der Faservolumen-anteil, die Schichtreihenfolge und vieles mehr variiert werden.

Erfindungsgemäß werden Organobleche mit glatter Oberfläche, wie sie aus dem Produktionsprozess erhalten werden, eingesetzt. Bevorzugt einzusetzende Organobleche mit glatten Plattenoberflächen weisen Rauheitsklassen nach DIN ISO 1302 mit Mittenrauwerten im Bereich von N1 bis N12 auf, bevorzugt im Bereich von N5 bis N12, besonders bevorzugt im Bereich von N10 bis N12.

Der Zusammenhang von Mittenrauwert, Rauheitsklasse und Ra-Wert wird auf http://de.wikipedia.org/wiki/Mittenrauwert erläutert und ist hier in Tabelle 1 wiedergegeben. Das Kürzel Ra steht für den arithmetischen Mittenrauwert und ist nach DIN EN ISO 4287:2010 genormt.

**Tabelle 1**

| N | Ra [μm] |
|---|---|
| 1 | 0,025 |
| 2 | 0,05 |
| 3 | 0,1 |
| 4 | 0,2 |
| 5 | 0,4 |
| 6 | 0,8 |
| 7 | 1,6 |
| 8 | 3,2 |
| 9 | 6,3 |
| 10 | 12,5 |
| 11 | 25 |
| 12 | 50 |

**Fasern**

Charakteristisch für Organobleche sind in die Polymermatrix einlaminierte Fasern in Form von Geweben, Gelegen, Gewirken, Gestricken oder Geflechten. Erfindungsgemäß wird der Begriff des Gewebes auf alle Faseranordnungen angewandt, also Gewebe und zusätzlich oder einschließlich Gewirke, Gelege, Gestricke, Geflechte, Matten, Vliese und unverkettet parallele Faserverläufe (=Rovings).

Die Fasern können im Matrixpolymer in ein-, zwei- oder dreidimensionaler Anordnung vorliegen. Eine eindimensionale Anordnung bedeutet in diesem Zusammenhang, dass die einzelnen Endlosfasern parallel zueinander ausgerichtet sind. Eine zweidimensionale Anordnung bedeutet, dass Fasern in einer ersten Richtung parallel zueinander ausgerichtet sind und dazu verdreht Fasern in einer zweiten Richtung. Bevorzugt sind die Fasern dabei in einem Winkel von 45° bis 90°, insbesondere von 90° zueinander verdreht, wobei ein Winkel von 90° auch kleine Abweichungen mit umschließt, die sich durch Legen der Fasern ergeben können. Bei einer dreidimensionalen Anordnung sind zusätzlich noch Fasern enthalten, die sich mit einem Teil senkrecht zu den anderen Faserrichtungen erstrecken.

Die Faserarten, Faserlängen und Faserorientierungen können grundsätzlich beliebig sein, sie werden nach den zu erwartenden Beanspruchungen gewählt und ausgelegt. Die Fasern können nicht nur einzeln vorliegen, sondern auch verdrillt oder versponnen sein; sie können natürlichen Vorkommens oder aber auch gezogene Glas- oder Kohlefasern, bis hin zu dünnen Metalldrähten sein.

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Erfindungsgemäß bevorzugt werden Organobleche auf Basis von Endlosfasern eingesetzt.

Die mechanischen und thermischen Eigenschaften von Organoblechen können über eine Vielzahl von Parametern eingestellt werden. Neben der Faser-Matrix-Kombination können beispielsweise der Faserwinkel, der Faservolumenanteil, die Schichtreihenfolge und vieles mehr variiert werden.

Die Fasern leiten die auf ein Organoblech einwirkenden Kräfte durch ihre im Vergleich zur Polymermatrix hohe Steifigkeit und ziehen somit die Last auf sich. Da die Faser eine höhere Steifigkeit als die Polymermatrix hat, wird die Last entlang der Fasern geleitet. Quer zur Faser haben Polymermatrix und Faser oft ähnliche Elastizitätsmodule. Zusätzlich müssen die Kräfte durch Adhäsivkräfte über die Faser-Matrix-Grenzfläche geleitet werden. Daher findet quer zur Faser in der Regel keine Verstärkungswirkung statt. Grund hierfür ist auch die Dehnungsvergrößerung.

Die Fasern sind in die Polymermatrix eingebettet. Betten bedeutet im Sinne der vorliegenden Erfindung, dass die Fasern durch die Polymermatrix räumlich fixiert sind, wodurch die Lasteinleitung und Lastausleitung ermöglicht wird. Zusätzlich stützt die Polymermatrix die Fasern, beispielsweise gegen Ausknicken bei faserparallelem Druck. Die Lastübertragung erfolgt über die Adhäsion zwischen Faser und Polymermatrix. Sie kann über Normal- oder Schubkräfte erfolgen. Die Thermoplast basierte Polymermatrix im Organoblech hat zudem die Aufgabe, die Fasern gegen Umgebungseinflüsse zu schützen.

Drei Kriterien müssen erfüllt sein, damit sich Steifigkeit und Festigkeit in Faserrichtung im Verbund erhöhen.

1. Das Elastizitätsmodul der Fasern in Längsrichtung muss höher sein, als der Elastitätsmodul der Polymermatrix: $E_{Faser,längs} > E_{Matrix}$

2. Die Bruchdehnung der Polymermatrix muss höher sein, als die die Bruchdehnung der Fasern: $\varepsilon_{Matrix,Bruch} > \varepsilon_{Faser,Bruch}$

3. Die Zugfestigkeit der Fasern in Längsrichtung muss größer sein, als die Zugfestigkeit der Polymermatrix: $R_{Faser,längs} > R_{Matrix}$

Erfindungsgemäß bevorzugte Fasern im Organoblech sind anorganische Verstärkungsfasern, metallische Verstärkungsfasern oder organische Verstärkungsfasern.

Anorganische Fasern haben eine amorphe Struktur. Ihre Vorteile sind die hohe Temperaturfestigkeit und der meist niedrige Preis. Gerade die Rohstoffe für die Glas- und Basaltfaser sind fast uneingeschränkt verfügbar. Bevorzugte anorganische Verstärkungsfasern sind Basaltfasern, Borfasern, Glasfasern, Keramikfasern, Kieselsäurefasern, insbesondere Glasfasern.

Bevorzugte metallische Verstärkungsfasern sind Stahl-Fasern.

Organische Fasern haben einen hohen Orientierungsgrad. Ihr Modul längs und quer zur Faser unterscheidet sich deutlich. Durch hohe Temperaturen zersetzen sich organische Fasern oder schmelzen. Diese Temperaturgrenze kann jedoch sehr unterschiedlich sein. Bevorzugte organische Verstärkungsfasern sind Aramidfasern, Kohlenstofffasern, Polyester-Fasern, Nylon-Fasern, Polyethylen-Fasern, Plexiglasfasern und insbesondere Aramidfasern.

Da die einzelnen Faserfilamente schwer zu handhaben sind, fasst man die trockenen Fasern zu Halbzeugen zusammen. Die Herstellungsverfahren von Halbzeugen für die Herstellung von erfindungsgemäß einzusetzenden Organoblechen entstammen in weiten Teilen der Textiltechnik wie zum Beispiel des Weben, Flechten oder Stricken. Bevorzugt werden die erfindungsgemäß im Organoblech der Mischbaugruppe einzusetzenden Endlosfasern in Form von Geweben, Gelegen, Gewirken, Gestricken, Geflechten, Matten, Vliesen oder Rovings (unverkettet parallele Faserverläufe) eingesetzt, besonders bevorzugt in Form von Gelegen oder Geweben, insbesondere in Form von Geweben. Gewebe entstehen durch das Verweben von Endlosfasern, insbesondere von Rovings. Das Verweben von Fasern geht zwangsläufig mit einer Ondulation der Fasern einher. Die Ondulation bewirkt insbesondere eine Absenkung der faserparallelen Druckfestigkeit, weshalb für mechanisch hochwertige Faser-Kunststoff-Verbunde bevorzugt Gelege verwendet werden.

In einem Gelege liegen die Fasern ideal parallel und gestreckt. Es finden ausschließlich Endlosfasern Verwendung. Gelege werden durch eine Papier- oder Fadenheftung zusammengehalten. Werden die Fasern nicht ausschließlich in der Ebene orientiert, so spricht man von Multiaxialgelegen. Meist werden die zusätzlichen Fasern senkrecht zur Laminatebene orientiert, um das Delaminations- und Impactverhalten zu verbessern.

Im Flechtverfahren werden aus Rovings hauptsächlich Schläuche geflochten, die der Herstellung von Rohren, Behältern oder allgemein der Herstellung hohler Bauteile dienen.

Sollen Bauteile mit quasiisotrophen Eigenschaften hergestellt werden, bieten sich Fasermatten an. Die Matten bestehen meist aus Kurz- und Langfasern, die locker über ein Bindemittel miteinander verbunden werden. Durch den Einsatz von Kurz- und Langfasern sind die mechanischen Eigenschaften von Bauteilen aus Matten denen von Geweben unterlegen.

Vliese werden durch das Vernadeln von Langfasern hergestellt. Sie dienen, als dünne Schicht aufgebracht, dem Oberflächenschutz oder der Verbesserung der Oberflächenwelligkeit. Die mechanischen Eigenschaften sind quasiisotrop und denen von Geweben unterlegen.

Bei der Verarbeitung von Fasern, beispielsweise dem Weben, wird auf die Fasern vorzugsweise ein Schutzüberzug - die Schlichte - aufgetragen. Dies ist besonders bei kerbempfindlichen Fasern wie der Glasfaser notwendig. Eine solche Schlichte nennt man Webschlichte. Sie wird in der Regel nach dem Weben wieder entfernt.

Die Schlichte kann auch als Haftvermittler zwischen Faser und Matrix dienen. Dazu muss jedoch die Schlichte auf das entsprechende Matrixsystem abgestimmt sein. Bevorzugt für den Einsatz in Thermoplast basierten Organoblechen sind Fasern mit einer Epoxydschlichte (Silanschlichte). Ein haftvermittelnder Auftrag kann die Faser-Matrix-Haftung erheblich steigern.

Die Polymermatrix aus wenigstens einem Thermoplast umgibt die Fasern, die durch Adhäsiv- oder Kohäsivkräfte an die Polymermatrix im Organoblech gebunden sind. Durch die Verwendung von Faserwerkstoffen haben Faser-Kunststoff-Verbunde, wie Organobleche, ein richtungsabhängiges Elastizitätsverhalten.

Ohne Polymermatrix sind die hohen spezifischen Festigkeiten und Steifigkeiten der Verstärkungsfaser nicht nutzbar. Erst durch die geeignete Kombination von Faser- und Matrixpolymer entsteht ein technisch verwertbares Organoblech.

Polymermatrix

Es gibt Organobleche mit einer thermoplastischen oder duroplastischen Polymermatrix. Erfindungsgemäß einzusetzende Organobleche basieren auf einer thermoplastischen Polymermatrix.

Als Polymermatrix sind erfindungsgemäß grundsätzlich alle gängigen Thermoplasten verwendbar. Faserverstärkte Kunststoffe mit einer thermoplastischen Matrix lassen sich nachträglich umformen oder verschweißen. Nach dem Abkühlen der Polymermatrix im Herstellungsprozess von Organoblechen sind solche Organobleche mit thermoplastischer Matrix einsatzbereit. Sie erweichen jedoch bei erhöhter Temperatur, was man in einem anschließenden Thermoformverfahren für die Formgebung von Organoblechen nutzt. Die Erweichungstemperatur ist dabei vom eingesetzten Thermoplasten abhängig. Besonders unangenehme Eigenschaften von Faser-Kunststoff-Verbunden sind das stark beschleunigte Kriechen und die Relaxation unter hohen Temperaturen. Mit zunehmendem Fasergehalt sinkt ihre Kriechneigung. Als thermoplastisches Polymer für die Polymermatrix von Organoblechen wird bevorzugt wenigstens eines aus der Gruppe Polyetheretherketon (PEEK), Polyphthalamid (PPA), thermoplastisches Polyurethan (TPU), Polycarbonat (PC), Polyphenylensulfid (PPS), Polysulfon (PSU), Polytherimid (PEI), Polyetrafluorethen (PTFE), Polypropylen (PP), Polyamid (PA) und Polyester (PE) eingesetzt. Erfindungsgemäß besonders bevorzugt sind Organobleche auf Basis von PA und/oder PE, ganz besonders bevorzugt PA, insbesondere bevorzugt teilkristalline Polyamide.

Die als Matrixpolymer bevorzugt einzusetzenden teilkristallinen Polyamide besitzen gemäß DE 10 2011 084 519 A1 eine Schmelzenthalpie von mehr als 25 J/g, gemessen mit der DSC-Methode gemäß ISO 11357 beim 2. Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode gemäß ISO 11357 beim 2. Aufheizen und Integration des Schmelzpeaks und von den amorphen Polyamiden mit einer Schmelzenthalpie von weniger als 4 J/g, gemessen mit der DSC-Methode gemäß ISO 11357 beim 2. Aufheizen und Integration des Schmelzpeaks. Bevorzugte teilkristalline Polyamide sind solche, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diaminodicyclohexyl-methan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomere sind eingeschlossen.

Erfindungsgemäß bevorzugt wird teilkristallines PA 6 oder teilkristallines PA 66 für die Polymermatrix eingesetzt, insbesondere PA 6. Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer $\alpha,\omega$- Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976.

Besonders bevorzugt wird als Matrixpolymer des Organoblechs ein teilkristallines Polyamid mit einer Viskositätszahl bestimmt in einer 0,5 gew.-%igen Lösung in 96 gew.-%iger Schwefelsäure bei 25 °C gemäß ISO 307 im Bereich von 80 bis 180 ml/g, besonders bevorzugt im Bereich von 90 bis 160 ml/g eingesetzt.

Die für die erfindungsgemäß zu verwendenden Organobleche als Matrixpolymer einzusetzenden Polyamide können nach verschiedenen Verfahren hergestellt und aus unterschiedlichen Bausteinen synthetisiert werden. Zur Herstellung von Polyamiden sind eine Vielzahl von Verfahrensweisen bekannt, wobei je nach gewünschtem Organoblech unterschiedliche Monomerbausteine sowie, verschiedene Kettenregler zur Einstellung eines angestrebten Molekulargewichtes, oder auch verschiedene Monomere mit entsprechenden reaktiven Gruppen für später beabsichtigte Nachbehandlungen eingesetzt werden.

Die technisch relevanten Verfahren zur Herstellung der in den erfindungsgemäß zu verwendenden Organoblechen als Matrixpolymer einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Die Verfahren zur Herstellung von Bauteilen aus Organoblechen hängen in erster Linie von der Art der verwendeten Halbzeuge ab, wobei als Halbzeuge die verschiedenen, oben genannten Faserstrukturen bezeichnet werden. Einige Verfahren sind sowohl mit imprägnierten als auch mit trockenen Halbzeugen anwendbar.

Die Auswahl des Verfahrens richtet sich weiter nach der zu fertigenden Stückzahl sowie den geometrischen Abmessungen des zu fertigenden und in der Mischbaugruppe einzusetzenden Organoblech basierten Bauteils. Da viele Strukturen auch alternativ mit anderen Halbzeugen und Verfahren hergestellt werden können, spielen bei der Auswahl wirtschaftliche Kriterien ein wichtige Rolle. Dem Fachmann sind zur Herstellung von FVKs bzw. Organoblechen eine Vielzahl von Verfahren bekannt. Bevorzugte Verfahren für vorimprägnierte Halbzeuge sind Autoklavverfahren, Faserspritzen, Pressen, Pultrusionsverfahren, Spritzguss und Wickelverfahren.

Bevorzugte Verfahren für trockene Halbzeuge sind Handlaminieren, Harzinjektionsverfahren und Wickelverfahren.

Die Auslegung und Berechnung von Faser-Kunststoff-Verbunden/Organoblechen ist in der VDI 2014 ICS 59.100, 83.140.20 (September 2006), Beuth Verlag GmbH, Berlin, beschrieben.

Die elastischen Eigenschaften von Faserverbundwerkstoffen, wie Organoblechen, werden auf der Grundlage der Eigenschaften von elementaren Einzelschichten berechnet (unidirektionale Schichten). Dieses Berechnungsverfahren ist als klassische Laminat-theorie bekannt. Gewebe werden dabei als zwei, in einem Winkel von 90° gedrehte, unidirektionale Schichten abgebildet. Einflüsse durch die Ondulation der Fasern im Gewebe werden durch Abminderungsfaktoren berücksichtigt. Eine Entwurfsmethode für gewichtsoptionale Laminate ist die Netztheorie.

Ergebnis der klassischen Laminattheorie sind die sogenannten Ingenieurskonstanten des Verbundwerkstoffs, $\hat{E}_x$, $\hat{E}_y$, $\hat{G}_{xy}$, $\tilde{V}_{xy}$, $\tilde{V}_{yz}$ und die Scheiben-Platten-Steifigkeitsmatrix. Diese Matrix besteht aus folgenden Elementen:

- Scheibensteifigkeits-Matrix A
- Plattensteifigkeits-Matrix D
- Koppel-Matrix B

Anhand dieser Matrizen können die Reaktionen des Verbundwerkstoffs auf

- Scheibenbelastungen: Normalspannungen $\sigma_1$, $\sigma_2$ und Schub $\tau_{12}$ in der Ebene
- Plattenbelastungen: Biegemomente $m_1$, $m_2$ und Drillmoment $m_{12}$

berechnet werden.

Die Koppel-Matrix koppelt dabei die Scheibenbelastungen mit den Plattenverformungen und umgekehrt. Für die Praxis von Interesse ist, dass eine besetzte Koppel-Matrix zu thermischem Verzug führt. Da auch thermische Dehnungen gekoppelt werden, verziehen sich Faserverbundbauteile, deren Koppelmatrix besetzt ist. Ziel vieler Forschungsvorhaben ist es, die Kopplungen in der Scheiben-Platten-Steifigkeitsmatrix gezielt konstruktiv zu nutzen.

In bevorzugter Ausführungsform werden erfindungsgemäß einzusetzende Organobleche in Form von Platten eingesetzt. Diese plattenförmigen Organobleche, in http://de.wikipedia.org/wiki/Thermoformen auch als Kunststofftafeln bezeichnet, können in einer Größe von 2.200 x 3.300 mm verarbeitet werden und lassen sich in einem weiteren Verarbeitungsprozess (um)formen, indem man sie erwärmt und dann einem Formgebungsprozess unter Wärme/Temperatur und/oder Druck, insbesondere einem Thermoformprozess - in Analogie zum Tiefziehprozess bei Metallen - unterzieht (siehe oben genanntes Zitat: Thermoformen von Plattenware). Bevorzugt vor dem Formgebungs-prozess werden erfindungsgemäß einzusetzende Organobleche wie Metallblech zuge-schnitten.

Bevorzugt weisen erfindungsgemäß einzusetzende Organobleche Stärken bzw. Dicken im Bereich von 0,5 bis 6,0 mm auf, besonders bevorzugt im Bereich von 0,5 bis 4,5 mm.

Bringt man Organobleche in eine Spritzgussform, so lassen sich vor oder nach dem Formgebungsprozess Funktions- und Dekorelemente verschiedenster Art, insbesondere Gelenk-, Verschluss-, Dichtungs- oder farbig abgesetzte Schmuckelemente, aus zusätzliche in die Spritzgussform einzuspritzendem, thermoplastischem Kunststoff an die Polymermatrix eines Organoblechs anspritzen. Erfindungsgemäß einzusetzende Organo-bleche werden beispielsweise unter der Bezeichnung Tepex® von der Bond-Laminates GmbH angeboten (siehe Produktbroschüre: "Tepex®, materials, properties and processes", Bond Laminates GmbH, Brilon Januar 2008). Bevorzugte Thermoformverfahren für Organobleche sind beschrieben unter http://www.bond-laminates.de/de/verarbeitungs-technologie/umformen.html und werden als *rubber and matched metal press forming, diaphragm forming, compression moulding* und *hybrid moulding* bezeichnet.

Zur Herstellung einer Mischbaugruppe wird das zu verwendende Organoblech mit wenigstens einer Lochung zur Aufnahme von wenigstens einer Schraube bzw. wenigstens eines Gewindeschafts versehen, die vorzugsweise durch Bohren oder Stanzen erhalten wird bzw. werden. Bevorzugt haben diese Lochungen Durchmesser im Bereich von 3 bis 12 mm.

**Metallkomponente**

Bei der zweiten Komponente der Mischbaugruppe handelt es sich um ein metallisches Anschlusselement mit ebenfalls wenigstens einer Lochung zur Aufnahme von wenigstens einer Schraube bzw. Schraubengewindes oder einer fest am metallischen Anschlusselement angebrachten Gewindestange, insbesondere angeschweißte Stehbolzen (Gewindebolzen).

Erfindungsgemäß mit dem Organoblech zu verbindende metallische Anschlusselemente, also die Metallkomponente der erfindungsgemäßen Mischbaugruppe, bestehen bevorzugt aus Stahl/Stahllegierungen, Aluminium oder Magnesium-Legierungen.

Auch das wenigstens eine erfindungsgemäß mit wenigstens einem Organoblech zu verbindende metallische Anschlusselement weist bevorzugt in der engeren Umgebung der wenigstens einen Lochung zur Aufnahme wenigstens einer Schraube bzw. Schraubenschafts eine flache, plattenförmige Umgebung auf. Diese ist bevorzugt durch einen Radius im Bereich von 0,2 bis 5 cm um eine Lochung herum charakterisiert.

**Verschraubung**

Bevorzugt werden für die Verschraubung der erfindungsgemäßen Mischbaugruppe metallische Schrauben mit metrischem Gewinde eingesetzt. Bevorzugte metrische Gewinde sind ISO-Gewinde nach DIN 13, metrische ISO-Trapezgewinde nach DIN 103, Whitworth-Gewinde in Anlehnung an die DIN 2999, Sägegewinde nach DIN 513 oder Rundgewinde nach DIN 405. Besonders bevorzugt sind Verschraubungen mit metrischem ISO-Gewinde nach DIN 13.

Eine bevorzugte Verschraubung besteht aus Schraube, metallischem Anschlusselement sowie wenigstens einer Unterlegscheibe, die bevorzugt zwischen Organoblech und Schraubenkopf eingefügt wird. Bevorzugt werden Schrauben aus Stahl eingesetzt. Bevorzugt werden metallische Anschlusselemente sowie Unterlegscheiben aus demselben Material wie die zu verwendenden Schrauben eingesetzt.

Die zulässigen Anzugsmomente hängen von der Schrauben Festigkeitsklasse, der Gewindegeometrie und dem Reibungskoeffizienten an der Schraubkopfauflage ab. Die Festigkeitsklassen bei Stahlschrauben werden in mehrere Qualitätsstufen unterteilt: 4.6, 5.6, 6.9, 8.8, 10.9, 12.9. Der Wert 4.6 repräsentiert hierbei die geringste Festigkeit, der Wert 12.9 die höchste Festigkeit. Bei höher belasteten, dauerfesten Verbindungen wird in der Regel und deshalb erfindungsgemäß bevorzugt eine Festigkeitsklasse ab 8.8 aufwärts bis 12.9 gewählt.

Gemäß http://www.schrauben-normen.de/anziehmomente.html liegen zulässige Anzugsmomente metrischer M8 Schrauben der Festigkeitsklasse 8.8 für metrische Regelgewinde (ISO-Gewinde nach DIN 13 mit Kopfauflagenmaße entsprechend DIN 912, 931, 934, 6912, 7984 und 7990) bei 90%iger Ausnutzung der Schrauben (Streckgrenze) im Bereich von 20 Nm bis 25 Nm. Daraus errechnet sich eine Vorspannkraft $F_V$ (= Klemmkraft) im Bereich von 13,5 kN bis 16,5 kN. Höhere Anzugsmomente führen zum plastischen Verformen der Schraube bis hin zum Abreißen des Schraubenkopfes. Weitere Werte für Vorspannkraft ($F_V$) in [kN] und Anzugsmomente ($M_A$) in [Nm] für Schrauben DIN 912 nach Festigkeitsklassen für Regelgewinde werden in der oben bezeichneten Quelle aufgeführt und in Tabelle 2 und **Tabelle 3** wie folgt wiedergegeben:

**Tabelle 2**

| Abmessung | $F_v$ | $F_v$ | $F_v$ | $F_v$ | $F_v$ |
|---|---|---|---|---|---|
| Festigkeitsklasse | 4,6 | 5,6 | 8,8 | 10,9 | 12,9 |
| M 4x0,70 | 1,29 | 1,71 | 3,9 | 5,7 | 6,7 |
| M 5x0,80 | 2,1 | 2,79 | 6,4 | 9,3 | 10,9 |
| M 6x1,00 | 2,96 | 3,94 | 9,0 | 13,3 | 15,4 |
| M 8x1,25 | 5,42 | 7,23 | 16,5 | 24,2 | 28,5 |
| M 10x1,50 | 8,64 | 11,5 | 26,0 | 38,5 | 45,0 |
| M 12x1,75 | 12,6 | 16,8 | 38,5 | 56,0 | 66,0 |
| M 14x2,00 | 17,3 | 23,1 | 53,0 | 77,0 | 90,0 |
| M 16x2,00 | 23,8 | 31,7 | 72,0 | 106,0 | 124,0 |

**Tabelle 3**

| Abmessung | $M_A$ | $M_A$ | $M_A$ | $M_A$ | $M_A$ |
|---|---|---|---|---|---|
| Festigkeitsklasse | 4,6 | 5,6 | 8,8 | 10,9 | 12,9 |
| M 4x0,70 | 1,02 | 13,7 | 3,0 | 4,4 | 5,1 |
| M 5x0,80 | 2,0 | 2,7 | 5,9 | 8,7 | 10 |
| M 6x1,00 | 3,5 | 4,6 | 10,0 | 15,0 | 18,0 |

(fortgesetzt)

| Abmessung | $M_A$ | $M_A$ | $M_A$ | $M_A$ | $M_A$ |
|---|---|---|---|---|---|
| M 8x1,25 | 8,4 | 11,0 | 25,0 | 36,0 | 43,0 |
| M 10x1,50 | 17,0 | 22,0 | 49,0 | 72,0 | 84,0 |
| M 12x1,75 | 29,0 | 39,0 | 85,0 | 125,0 | 145,0 |
| M 14x2,00 | 46,0 | 62,0 | 135,0 | 200,0 | 235,0 |
| M 16x2,00 | 71,0 | 95,0 | 210,0 | 310,0 | 365,0 |

Die Vorspannkraft wird erfindungsgemäß über den Schraubenkopf direkt, oder in bevorzugter Ausführungsform indirekt über eine Unterlegscheibe, auf die zu verbindenden Elemente der erfindungsgemäßen Mischbaugruppe aufgebracht. Die Dimensionierung des Schraubenkopfes oder der in einer Ausführungsform zusätzlich einzusetzenden Unterlegscheibe bestimmt die aufgebrachte Flächenpressung.

**Beispiele**

**Einsatzstoffe**

| | |
|---|---|
| Durethan® BKV 30 H2.0: | Polyamid 6, 30 % Glasfasern, wärmestabilisiert ISO Formmassenbezeichnung: ISO 1874-PA 6,GHR,14-090,GF30 Lanxess Deutschland GmbH, Köln |
| Durethan® BKV 30 EF: | Polyamid 6, 30 % Glasfasern, leichtfließend, wärmestabilisiert ISO Formmassenbezeichnung: ISO1874-PA 6, GHR, 10-090,GF30 Lanxess Deutschland GmbH, Köln |
| Durethan® DP BKV 60 H2.0 EF: | Polyamid 6, 60 % Glasfasern, leichtfließend, wärmestabilisiert ISO Formmassenbezeichnung: SO1874-PA 6, GHR, 10-220, GF60 Lanxess Deutschland GmbH, Köln |
| Tepex®-dynalite 102 RG 600: | 47 Vol.-% Roving Glas Gewebe (Köperbindung) enthaltendes, Polyamid 6 konsolidiertes Composit Laminat, Dichte 1,3 g/cm³ Bond-Laminates GmbH, Brilon |

**Versuchsdurchführung**

In den Untersuchungen im Rahmen der vorliegenden Erfindung wurden die Losdrehmomente von mit 5 Nm verschraubten metrischen M6 Schrauben vor und nach einer Wärmelagerung überprüft. 5 Nm erzeugen rechnerisch 4,4 kN Vorspannkraft = 55 N/mm² Flächenpressung (über die Fläche der Unterlegscheibe berechnet).

Hierzu wurden als Kunststoff basierte Prüfkörper verwendet:

1. Eine Testplatte (1) aus Durethan® BKV30H2.0 mit der Abmessung 40mm•40mm•1,5mm. Die Plattenoberfläche der Platte (1) war glatt nach DIN ISO 1302 Rauheitsklasse N10 (Mittenrauwert 12,5 μm)
2. Eine Testplatte (2) aus Durethan® BKV60EFH2.0 mit der Abmessung 40mm•40mm•1,5mm. Die Plattenoberfläche der Platte (2) war glatt nach DIN ISO 1302 Rauheitsklasse N10 (Mittenrauwert 12,5 μm)
3. Eine Testplatte (3) aus Tepex® Dynalite 102 RG600 mit der Abmessung 40mm•40mm•1,5mm (= Organoblech)

Die Plattenoberfläche der Testplatte (3), das Organoblech, war glatt nach DIN ISO 1302 Rauheitsklasse N12 (Mittenrauwert 50 μm)

Jede Testplatte war zentral mit einer Bohrung von 06,5mm versehen. Für die Verschraubung wurde jeweils eine Zylinderschraube M6x20 mit Innensechskant der Festigkeitsklasse 8.8 verwendet (Zylinderschraube DIN 912 - M6 x20 - 8.8).

Zwischen dem Schraubenkopf und der zu prüfenden Testplatte wurde eine Unterlegscheibe mit Außen 012,5mm, Innen 06,4mm und Dicke 1,6mm eingesetzt (Scheibe A 6,4 DIN 125 - St).

Das das Gewinde aufnehmende metallische Anschlusselement war ein Stahlzylinder mit 25mm Außendurchmesser, 30mm lang und einer zentralen durchgehenden M6 Gewindebohrung.

Die Schraube wurde durch das Loch in der jeweils zu untersuchenden Testplatte geführt und in das das Gewinde aufnehmende metallische Anschlusselement geschraubt. Dabei wurde die Unterlegscheibe auf den Schraubenschaft aufgefädelt und zwischen Schraubenkopf und der jeweiligen Testplatte platziert.

Die Schraube wurde bei 23°C mit einem Drehmomentschlüssel mit elektronischer Messdatenerfassung bei 5 Nm Anzugsmoment verschraubt. Anschließend wurde bei 23°C an der Schraube mit dem gleichen Werkzeug das Losdrehmoment ermittelt.

Danach erfolgte wiederum ein Verschraubungsvorgang bei 23°C mit 5 Nm mit anschließender Lagerung über 7 Tage im Wärmeschrank bei 60°C. Nach Entnahme aus dem Wärmeschrank kühlte die Mischbaugruppe auf 23°C ab, bevor erneut das Losdrehmoment ermittelt wurde.

Die Differenz zwischen erstem Losdrehmoment (Losdrehmoment direkt) vor der Wärmelagerung und dem Losdrehmoment nach der Wärmelagerung lässt ein Zurückrechnen auf den Verlust der Schraubenvorspannkraft zu.

Das erfindungsgemäß als Testplatte (3) eingesetzte Organoblech zeigte in beiden Prüfungen nur einen geringen Abfall des Losdrehmoments und blieb damit innerhalb des gemäß der Aufgabenstellung zur vorliegenden Erfindung zulässigen 50% Losdrehmomentverlusts, was in Tabelle 4 durch ein (+) ausgedrückt wird. Dieser Wert korreliert gemäß http://www.schweizer-fn.de/maschinenelemente/schraube/schraubenverbindung.php mit der Vorspannkraft bzw. Schraubenvorspannung gemäß Formel

$$M_L = F_V \cdot [\, d_2/2 \cdot \tan(-\varphi° + \rho`) + \mu_K \cdot d_{K,R} / 2\,]$$

worin

$$d_{K,R} = d_K + d_i / 2$$

$$\varphi° = arctan(\, P / d_2 \cdot \pi\,)$$

$$\rho` = arctan(\, \mu_G / \cos(ß/2)\,)$$

und die einzelnen Parameter folgende Bedeutungen haben

$M_L$ = Losdrehmoment (Nmm)
$F_V$ = Vorspannkraft (N)
$d_2$ = Flankendurchmesser (mm)
p' = Gewindereibwert (Grad)
$\varphi°$ = Steigungswinkel (Grad)
$\mu_K$ = Reibwert Kopfauflage (---)
$d_{K,R}$ = Reibdurchmesser Kopfauflage (mm)
$d_K$ = Außendurchmesser Kopfauflage (mm)
$d_i$ = Bohrungsdurchmesser (mm)
$P$ = Gewindesteigung (mm)
$\mu_G$ = Gewindereibwert (---)
ß = Flankenwinkel (Grad)

Die Vorspannkraft bzw. Schraubenvorspannung blieb beim Einsatz von Testplatte (3), dem Organoblech, trotz Lagerung stets zu mehr als 50% erhalten (+). Im Gegensatz dazu zeigten die Testplatten (1) und (2), beide basierend auf Schnittglasfaser verstärkten Poly-amid basierten Formmassen, jeweils einen Verlust der Schraubenvorspannung von mehr als 50% sowohl unmittelbar (direkt), als auch nach 7 Tagen Lagerung bei 60 °C, was in **Tabelle 4** durch (-) angezeigt wird.

**Tabelle 4**

| Prüfkörper, Material | Anzugsdrehmoment [Nm] | Losdrehmoment direkt | Losdrehmoment nach 7 Tagen Lagerung bei 60°C, [Nm] ist mindestens 50% vom "Losdrehmoment direkt" |
|---|---|---|---|
| Testplatte (1) | 5 | (-) | (-) |
| Testplatte (2) | 5 | (-) | (-) |

(fortgesetzt)

| Prüfkörper, Material | Anzugsdrehmoment [Nm] | Losdrehmoment direkt | Losdrehmoment nach 7 Tagen Lagerung bei 60°C, [Nm] ist mindestens 50% vom "Losdrehmoment direkt" |
|---|---|---|---|
| Testplatte (3) | 5 | (+) | (+) |

**Patentansprüche**

1. Verwendung von Organoblech zur Reduktion von Relaxationsvorgängen oder zum Erhalt der Schraubenvorspannung von Mischbaugruppen aus einerseits wenigstens einem Thermoplast basierten Organoblech und andererseits wenigstens einer Metallkomponente, die durch wenigstens eine Schraube mit Gewinde und wenigstens einem entsprechenden, das Schraubgewinde aufnehmenden, metallischen Anschlusselement verbunden sind, ohne dass zusätzliche Elemente entlang des Schraubenschafts erforderlich sind, bei Temperaturen im Bereich von -40°C bis 60°C.

2. Verwendung gemäß Anspruch 1, **dadurch gekennzeichnet, dass** entweder unter dem Schraubenkopf oder unter dem das Gewinde aufnehmenden metallischen Anschlusselement oder unter beiden jeweils wenigstens eine Unterlegscheibe eingefügt wird.

3. Verwendung gemäß Anspruch 1 oder 2, **dadurch gekennzeichnet, dass** als Gewinde aufnehmendes metallisches Anschlußelement wenigstens eine Kontermutter eingesetzt wird.

4. Verwendung gemäß einem der Ansprüche 1 oder 2, **dadurch gekennzeichnet, dass** das metallische Anschlusselement selber ein Metallblech ist, das entweder mit wenigstens einer Kontermutter zur Mischbaugruppe mit wenigstens einem Organoblech verbunden wird, oder ein Metallblech ist, das selber mit wenigstens einem Gewindegang versehen ist, um wenigstens ein Schraubgewinde aufzunehmen.

5. Verwendung gemäß einem der Ansprüche 1 bis 4, **dadurch gekennzeichnet, dass** sowohl das Organoblech als auch die Metallkomponente in der engeren Umgebung der wenigstens einen Verschraubung flache, plattenförmige Komponenten sind und die engere Umgebung durch einen Radius im Bereich von 0,2 bis 5 cm um eine Bohrung herum zur Aufnahme einer Schraube charakterisiert ist.

6. Verwendung gemäß einem der Ansprüche 1 bis 5, **dadurch gekennzeichnet, dass** das Organoblech auf einlaminierten Fasern in Form von Geweben, Gelegen, Gewirken, Gestricken, Geflechten, Matten, Vliesen oder Rovings basiert.

7. Verwendung gemäß Anspruch 6, **dadurch gekennzeichnet, dass** es sich um anorganische Verstärkungsfasern, metallische Verstärkungsfasern oder organische Verstärkungsfasern handelt.

8. Verwendung gemäß Anspruch 6 oder 7, **dadurch gekennzeichnet, dass** Endlosfasern eingesetzt werden.

9. Verwendung gemäß einem der Ansprüche 6 bis 8, **dadurch gekennzeichnet, dass** als anorganische Verstärkungsfasern Basaltfasern, Borfasern, Glasfasern, Keramikfasern, Kieselsäurefasern, insbesondere Glasfasern, eingesetzt werden.

10. Verwendung gemäß einem der Ansprüche 1 bis 9, **dadurch gekennzeichnet, dass** als Thermoplast Polyetheretherketon (PEEK), Polyphthalamid (PPA), thermoplastisches Polyurethan (TPU), Polycarbonat (PC), Polyphenylensulfid (PPS), Polysulfon (PSU), Polytherimid (PEI), Polyetrafluorethen (PTFE), Polypropylen (PP), Polyamid (PA) oder Polyester (PE) eingesetzt werden, bevorzugt PA und/oder PE, besonders bevorzugt semikristalline Polyamide.

11. Verwendung gemäß einem der Ansprüche 1 bis 10, **dadurch gekennzeichnet, dass** Organobleche in Form von Platten eingesetzt werden.

12. Verwendung gemäß Anspruch 11, **dadurch gekennzeichnet, dass** die Organobleche Stärken im Bereich von 0,5 bis 6,0 mm aufweisen.

13. Verwendung gemäß einem der Ansprüche 1 bis 12, **dadurch gekennzeichnet, dass** die Metallkomponente aus Stahl/Stahllegierungen, Aluminium oder Magnesium-Legierungen besteht.

14. Verwendung gemäß einem der Ansprüche 1 bis 13, **dadurch gekennzeichnet, dass** für die Verschraubung metallische Schrauben mit metrischem ISO-Gewinde nach DIN 13, metrische ISO-Trapezgewinde nach DIN 103, Whitworth-Gewinde in Anlehnung an die DIN 2999, Sägegewinde nach DIN 513 oder Rundgewinde nach DIN 405 verwendet werden.

15. Verwendung gemäß Anspruch 14, **dadurch gekennzeichnet, dass** Schrauben aus Stahl eingesetzt werden.

Europäisches
Patentamt

European
Patent Office

Office européen
des brevets

**EUROPÄISCHER RECHERCHENBERICHT**

Nummer der Anmeldung

EP 14 18 1510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 394 537 B1 (DEREES DELBERT D [US]) 28. Mai 2002 (2002-05-28) * das ganze Dokument * ----- | 1-15 | INV. B29C65/56 ADD. F16B5/02 |
| X | US 2010/219294 A1 (KISMARTON MAX U [US]) 2. September 2010 (2010-09-02) * das ganze Dokument * ----- | 1-15 | |
| A | US 2003/021628 A1 (GUDAITIS CHARLES NEWELL [US] ET AL) 30. Januar 2003 (2003-01-30) * das ganze Dokument * ----- | 1-15 | |

RECHERCHIERTE SACHGEBIETE (IPC)

B29C
F16B

Der vorliegende Recherchenbericht wurde für alle Patentansprüche erstellt

| Recherchenort | Abschlußdatum der Recherche | Prüfer |
|---|---|---|
| München | 29. Januar 2015 | Peña, Alejandro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 1510

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2015

| Im Recherchenbericht angeführtes Patentdokument | Datum der Veröffentlichung | Mitglied(er) der Patentfamilie | Datum der Veröffentlichung |
|---|---|---|---|
| US 6394537 B1 | 28-05-2002 | CA 2369847 A1<br>DE 10203829 A1<br>GB 2372728 A<br>MX PA02001068 A<br>US 6394537 B1 | 31-07-2002<br>01-08-2002<br>04-09-2002<br>05-11-2002<br>28-05-2002 |
| US 2010219294 A1 | 02-09-2010 | AU 2011253392 A1<br>CA 2797195 A1<br>CN 102892572 A<br>EP 2569144 A1<br>JP 2013532075 A<br>RU 2012153176 A<br>US 2010219294 A1<br>WO 2011142920 A1 | 04-10-2012<br>17-11-2011<br>23-01-2013<br>20-03-2013<br>15-08-2013<br>20-06-2014<br>02-09-2010<br>17-11-2011 |
| US 2003021628 A1 | 30-01-2003 | US 6668441 B1<br>US 2003021628 A1 | 30-12-2003<br>30-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009013265 A1
- DE 2656017 A1
- DE 102013001943 A1
- DE 102008034772 A1
- DE 102011119251 A1
- DE 102011084519 A1

**In der Beschreibung aufgeführte Nicht-Patentliteratur**

- Kunststoffe und ihre Eigenschaften. VDI-Verlag, 1976, 272 ff
- Faser-Kunststoff-Verbunden/Organoblechen ist in der VDI 2014 ICS 59.100, 83.140.20. Beuth Verlag GmbH, September 2006
- Produktbroschüre: "Tepex®, materials, properties and processes. Bond Laminates GmbH, 2008